# EUROPÄISCHE PATENTSCHRIFT

(11) **EP 3 937 830 B1**
(45) Veröffentlichungstag und Bekanntmachung des Hinweises auf die Patenterteilung: **09.08.2023**
(21) Anmeldenummer: 20709538.1
(22) Anmeldetag: 04.03.2020
(51) Int. Cl.: A61C 7/36, A61C 19/05

(54) **ZAHNSCHIENE UND VERFAHREN ZU DEREN HERSTELLUNG**
DENTAL SPLINT AND METHOD FOR PRODUCING SAME
ATTELLE DENTAIRE ET SON PROCÉDÉ DE FABRICATION

(30) Priorität: 11.03.2019 DE 102019106125; 15.07.2019 DE 102019119080
(43) Veröffentlichungstag der Anmeldung: 19.01.2022
(73) Patentinhaber: zebris Medical GmbH, 88316 Isny im Allgäu (DE)
(72) Erfinder: KORDASS, Bernd, 17498 Neuenkirchen (bei Greifswald) (DE); LANG, Hans, Walter, 88299 Leutkirch (DE); SOMMER, Dennis, 87463 Dietmannsried (DE); BRUNNER, Wolfgang, 88316 Isny (DE)
(74) Vertreter: Meissner Bolte Partnerschaft mbB
(86) Internationale Anmeldenummer: PCT/EP2020/055657
(87) Internationale Veröffentlichungsnummer: WO 2020/182567

(56) Entgegenhaltungen:
- WO-A1-2014/017646
- US-A1- 2003 224 312

## Beschreibung

Die Erfindung betrifft ein Verfahren zur Herstellung einer Zahnschiene, insbesondere zur Behandlung von craniomandibulärer Dysfunktion oder zur Korrektur von Zahnfehlstellungen, aufweisend einen Kunststoff-, Composite - und/oder Elastomer-Flächenkörper mit einer Unterseite, die mit einer Ausformungs-Konfiguration gemäß mindestens Abschnitten des Zahnoberflächenprofils eines Patienten-Unterkiefers versehen ist. Sie betrifft des Weiteren eine mit einem solchen Verfahren hergestellte Zahnschiene sowie ein Set von Zahnschienen mit verschiedenen Zahnoberflächenprofilen.

Viele Menschen leiden unter Funktionsstörungen des Kiefergelenks, die weitreichende Folgen haben und zu erheblichen Einschränkungen der Lebensqualität führen können, wie etwa eingeschränkte Kieferöffnung, Knacken oder Reiben des Kiefergelenks beim Öffnen oder Schließen des Mundes, Kopfschmerzen, Tinnitus, Schwindel, Schluckbeschwerden, Ohrenschmerzen und ausstrahlende Schmerzen in den gesamten Kopf, den Nacken, die Schulter und den Rücken. Als Therapie für derartige Funktionsstörungen (craniomandibuläre Dysfunktion, CMD) hat sich die Therapie mit sog. Aufbissschienen bewährt. Sie führt bei den beschriebenen Problemen zu Entlastung und bringt die Zähne und das Kiefergelenk weitgehend wieder in ihre richtige Stellung.

Zahnschienen werden des Weiteren eingesetzt, um kieferorthopädische Fehlstellungen von Zähnen zu korrigieren. Dabei wird mit solchen Schienen und entsprechend elastischem Schienenmaterial Druck auf gewünschte Zahnbereiche ausgeübt. Dies führt zu einem Abbau des Knochenmaterials des Zahnhalteapparats und ermöglicht eine gezielte Verschiebung der Zähne. Damit ein kontinuierlicher Druck auf die Zähne und damit eine Verschiebung bis zur gewünschten Zahnposition erhalten bleibt, wird die den zu verschiebenden Zähnen zugewandte Seite ständig nachjustiert und die Schienen werden ausgetauscht.

Zahnschienen sind daher seit Längerem bekannt, und es haben sich verschiedene Herstellungsverfahren hierfür etabliert. Zur Anfertigung wird üblicherweise zunächst ein Alginatabdruck vom Gebiss genommen. Dieser wird mit Superhartgips ausgegossen. Auf dem Modell wird mittels Tiefziehgerät eine heiße Polymerfolie gezogen. In jüngerer Zeit hat sich auch die Herstellung in einem koordinatengesteuerten Fräsverfahren etabliert, dessen Ausgangspunkt ein mit einem 3D-Scanner am oben erwähnten Gipsmodell gewonnene Datensätze des Zahnoberflächenprofils von Oberkiefer und Unterkiefer sind. In jüngster Zeit wurden auch 3D-Druckverfahren, auch bezeichnet als Additive Manufacturing, zur Herstellung von Aufbissschienen eingesetzt. Auch hierbei wird von Datensätzen ausgegangen, die durch Digitalisierung der Oberflächen von Zahnabdruckmodellen gewonnen wurden.

Bei einem herkömmlichen Verfahren schließt der Patient aus einer relativ großen Mundöffnung heraus den Unterkiefer. Zwischen den Zahnreihen wird dabei eine plastische Masse so von den Zähnen geformt, das sogenannte zentrische Registrat entsteht.Diese Methode hat den Nachteil, dass Patienten mit CMD beziehungsweise Gelenkschmerzen meist keine geeignete Schließbewegung durchführen kann. Das zentrische Registrat wird daher häufig wertlos.

Sofern die Funktion des Zahnschiene über eine reine Schutzfunktion gegen übermäßigen Abrieb der Zahnoberflächen (wie etwa bei einer sog. "Knirscher-Schiene") hinausgehen soll, greift der Zahnarzt üblicherweise in den Entwurfsprozess mit bestimmten Vorgaben zur Funktion der Schiene ein. Bei der auf Datensätzen basierenden Herstellung wirkt sich dies durch die Vorgabe bestimmter Zuordnungen zwischen den Zahnoberflächenprofil-Datensätzen von Unterkiefer und Oberkiefer aus. Alternativ hierzu oder zusätzlich kann die Funktion der Schienen an einem Artikulator simuliert werden, in den das Modell eingesetzt wird und in dem es bestimmten Bewegungsabläufen unterworfen wird. In der therapeutischen Praxis zeigen sich beim Einsatz von Zahnschienen nicht selten gewisse Probleme, insbesondere im langzeitigen Gebrauch der Schienen.

Es besteht daher die Aufgabe, Verfahren zur Herstellung von Zahnschienen - und entsprechend hergestellte Zahnschienen - anzugeben, die vorteilhaft zur Behebung derartiger Probleme eingesetzt werden können. Im Übrigen besteht ein Bedarf, auch funktional hochwertige Schienen kostengünstiger herstellen zu können und hierzu insbesondere den Zeitaufwand des Zahnarztes und/oder Zahntechnikers im Entwurfsprozess zu verringern. Schließlich sollen die o.a. Limitierungen von auf herkömmliche Weise hergestellten Zahnschienen möglichst überwunden werden.

Werden Zahnschienen zum Verschieben der Zähne eingesetzt, so ist es wichtig, dass im Laufe der kieferorthopädischen Behandlung und auch bei kontinuierlichem Austausch der Schienen eine für den Patienten vorteilhafte Kieferrelation bzw. Kondylenposition erhalten bleibt oder erzeugt wird.

US 2003/224312 A1 offenbart ein Verfahren zur Herstellung einer Zahnschiene, insbesondere zur Korrektur von Zahnfehlstellungen, offenbart jedoch mindestens nicht die schritte wobei: die Zahnoberflächen des Unterkiefers und Oberkiefers eingescannt werden, in der Position optimaler Okklusion mittels eines Positionsbestimmungssystems eine Okklusions-Lagebeziehung zwischen Unterkiefer und Oberkiefer und somit eine Okklusions-Relation zwischen den Datensätzen der zugehörigen Scans bestimmt wird, in einer von der Okklusion verschiedenen Position mittels eines Positionsbestimmungssystems eine Nicht-Okklusions-Lagebeziehung zwischen Unterkiefer und Oberkiefer und somit eine Nicht-Okklusions-Relation zwischen den Datensätzen der zugehörigen Scans bestimmt wird.

Nicht selten gehen nämlich kieferorthopädische Probleme mit falscher Zahnstellung einher mit Problemen einer craniomandibulären Dysfunktion.

Die o.g. Aufgaben werden in ihrem Verfahrensaspekt durch Verfahren mit den Merkmalen des Anspruchs 1, 2 oder 5 und in ihrem Produktaspekt durch eine Zahnschiene gemäß Anspruch 11 und spezieller durch ein Set von Zahnschienen gemäß Anspruch 17 gelöst. Vorteilhafte Ausprägungen des Erfindungsgedankens finden sich in den jeweiligen abhängigen Ansprüchen.

Die Erfindung schließt den Gedanken ein, bei der Herstellung einer Zahnschiene ohne die zeit- und kostenaufwändige Zwischenstufe der Gewinnung eines Abdrucks des Zahnoberflächenprofils und eines entsprechenden Hartgipsmodells auszukommen. Hierzu ist gemäß einem ersten Aspekt der Erfindung vorgesehen, die Zahnoberflächen intraoral mittels eines entsprechenden Intraoralscanners direkt einzuscannen. Derartige Intraoralscanner sind an sich bekannt, und ihr Einsatz ist u.a. in Schutzrechtsveröffentlichungen der Anmelderin beschrieben, so etwa in DE 10 2014 111 643 A1.

Entsprechende technische Ausgereiftheit und Genauigkeit vorausgesetzt, lässt sich durch die direkte Abbildung der Zahnoberflächen zur Gewinnung von Datensätzen des Zahnoberflächenprofils die Ungenauigkeit und Fehleranfälligkeit vermeiden, die prinzipbedingt der Abformung der Zahnoberflächen mittels eines Registrats und dem weiteren Übertragungsschritt in ein hartes Modell anhaftet. Vor allem aber wird der Arbeitsaufwand zumindest im zahntechnischen Bereich, ggf. auch im zahnärztlichen Bereich, und die hierdurch bedingte Kostenlast auf die Herstellung der Zahnschiene reduziert.

Grundsätzlich kommt im Rahmen der Erfindung auch ein indirektes Scannen der Zahnoberflächen an einem Zahnabdruck in Betracht - allerdings unter Preisgabe der oben erwähnten Vorteile eines intraoralen Scannens.

Gemäß einem weiteren Gedanken der Erfindung ist vorgesehen, dass verschiedene mögliche Lagebeziehungen bzw. Bewegungsabläufe zwischen Unterkiefer und Oberkiefer "automatisiert" unter Einsatz eines Positionsbestimmungssystems registriert werden und die bei der Positionsbestimmung gewonnen Datensätze mit den intraoral gewonnenen Zahnoberflächenprofil-Datensätzen verknüpft werden. Auch die Bestimmung der Lagebeziehung zwischen Unterkiefer und Oberkiefer in festen Gebissstellungen oder während Bewegungsabläufen ist als solche bekannt; vgl. dazu etwa die DE 10 2014 102 111 B4 der Anmelderin.

Im Kontext der vorliegenden Erfindung ermöglicht dieses Verfahren in besonders vorteilhafter Weise die Erfassung der Kieferrelationen aus einer physiologischen Öffnungsbewegung. Hierbei kann der Patient den Unterkiefer bei entspannter Schließmuskulatur schwerkraftbedingt einfach fallen lassen, ohne dass belastete oder schmerzhafte Muskeln einer Schließbewegung aktiv sind. Zudem entfällt die bei den bekannten Verfahren gegebene Bindung der relevanten Datensätze an eine einzelne Kondylenposition die noch dazu möglicherweise therapeutisch suboptimal ist.

Der Schritt bzw. Ablauf der Positions-/Bewegungsbestimmung kann die gleichzeitige fortlaufende intraorale Abtastung der Oberkiefer- und Unterkieferzähne, wobei die Zähne aufeinander oder einem eingebrachten Stützstift bzw. Abstandshalter gleiten, umfassen. Das Einscannen der Zahnoberflächen kann aber auch separat erfolgen. Das zur Positions-/Bewegungserfassung genutzte Messsystem arbeitet, in an sich bekannter Weise, mit Kameras und reflektierenden oder aktiven Markerelementen oder mit Ultraschallsensoren nach dem Prinzip der Laufzeitmessung oder mit Magnetsensoren oder Inertialsensoren, oder es umfasst eine Kombination der verschiedenen hier genannten Sensortypen.

Die direkte "automatisierte" Positionserfassung der Kiefer des Patienten während relevanter Bewegungsabläufe ist der bekannten Simulation an einem Artikulator in verschiedener Hinsicht deutlich überlegen. Insbesondere erfolgt sie in Bezug auf die spezifische Anatomie des konkreten Patienten und nicht an einem unspezifischen Gerät. Weiterhin lassen sich unmittelbar Datensätze gewinnen, die im Herstellungsverfahren (mit vorbestimmten Modifikationen) als Steuerdatensätze genutzt werden können. Weiterhin lässt sich die unmittelbare Gewinnung der Koordinaten-Datensätze mit Feedback des Patienten verknüpfen; siehe dazu weiter unten.

In die vorliegende Erfindung fließt auch der therapeutische Ansatz ein, einem unter CMD leidenden Patienten nicht schlechthin eine einzige Aufbissschiene, deren Form dem Zustand optimaler Okklusion entspricht, sondern mindestens eine Aufbissschiene - bevorzugt ein ganzes Set von Aufbissschienen - bereitzustellen, deren Ausformungen auf der Oberseite und Unterseite einen definierten räumlichen (also lateralen und/oder frontal-dorsalen und/oder vertikalen) Verschiebungsbetrag gegenüber der Positions-Relation optimaler Okklusion aufweist. Hierzu wird wie folgt vorgegangen:
a) Es wird in der Position optimaler Okklusion mittels eines Positionsbestimmungssystems eine Okklusions-Lagebeziehung zwischen Unterkiefer und Oberkiefer und somit eine Okklusions-Relation zwischen den Datensätzen der zugehörigen intraoralen Scans bestimmt.
b) Es wird in einer von obiger Okklusion verschiedenen Position mittels des Positionsbestimmungssystems eine therapeutische Kieferrelation zwischen Unterkiefer und Oberkiefer und somit eine therapeutische Okklusions-Relation zwischen den Datensätzen der zugehörigen intraoralen Scans bestimmt.
c) Es wird aus den Datensätzen der nicht kiefertherapeutisch wirksamen Okklusions-Relation und der therapeutischen Okklusions-Relation der vorbestimmte laterale und/oder dorsale und/oder vertikale Verschiebungsbetrag bestimmt.

Es versteht sich, dass jegliche Zahnschiene eine "herkömmliche" Okklusion der Zahnoberflächen, wie sie ohne Schiene erreicht wird, verhindert, so dass hier unter einer "Okklusions-Lagebeziehung" oder "Okklusions-Relation" eine solche verstanden wird, wie sie mit eingesetzter Zahnschiene dann erreicht wird, wenn keine kiefertherapeutische Wirkung erreicht werden soll. Wo nachfolgend und in den Ansprüchen aber von einer "Nichtokklusions-Relation" gesprochen wird, ist hierunter, verkürzt formuliert, eine Relativposition zwischen Unterkiefer und Oberkiefer zu verstehen, die gegenüber einer Position eines reinen "Zusammenpassens" der Zahnoberflächen von Unter- und Oberkiefer eine kiefertherapeutische Funktion bzw. Wirkung hat.

Der erwähnte Effekt wird mittels der bewusst eingeführten lateralen und/oder dorsalen und/oder vertikalen Verschiebungsbeträge erreicht, die eine entsprechend verschobene Relativposition des Unterkiefers gegenüber dem Oberkiefer beim Tragen der jeweiligen Zahnschiene erzwingen. Es wird darauf hingewiesen, dass mit einer Kombination von lateralen und dorsalen Verschiebungen der Ausformungen auch bestimmte (kleine) Rotation/Verdrehungen des Unterkiefers gegenüber dem Oberkiefer gegenüber dem Zustand "idealer" Okklusion bewirkt werden können.

Aufgrund der auf diese Weise gewonnenen Steuerdaten werden schließlich, in einer ersten Ausprägung des erfindungsgemäßen Verfahrens, die Ausformungskonfigurationen auf der Unterseite bzw. Oberseite der Zahnschiene, unter Berücksichtigung des vorbestimmten lateralen und/oder dorsalen und/oder vertikalen Verschiebungsbetrages, mittels eines koordinatengesteuerten, abtragenden Bearbeitungsverfahrens (insbesondere Fräsen) aus einem geeigneten Grundkörper (etwa aus PMMA) herausgearbeitet.

In einer hierzu alternativen Ausprägung werden die entsprechenden Datensätze dazu benutzt, die Zahnschiene mittels eines additiven Herstellungsverfahrens aufgrund der Scans mindestens von Abschnitten der Zahnoberflächen des Unterkiefers und Oberkiefers aufzubauen. Bei diese Ausführung wird insbesondere die Zahnschiene mittels eines 3D-Kunststoffdruckverfahrens mit den vollständigen Datensätzen der Scans der Zahnoberflächen des Unterkiefers und Oberkiefers gebildet. Es versteht sich, dass erfindungsgemäß auch hier der vorbestimmte Verschiebungsbetrag gegenüber der Positions-Relation optimaler Okklusion berücksichtigt wird.

In einer noch weiteren Ausprägung des erfindungsgemäßen Herstellungskonzeptes wird von einer thermoplastischen Folie als Grundkörper (Flächenkörper) für die Zahnschiene ausgegangen, und dieser Folie werden auf der Unterseite bzw. Oberseite die oben erwähnten Ausformungs-Konfigurationen verformend aufgeprägt, oder es wird auf die Folie ein Anpassungselement aufgeklebt oder aufvulkanisiert oder in einem anderen Verfahren aufgesetzt und verbunden, welches mit einem Verfahren gemäß einer der oben genannten Ausprägungen der Erfindung hergestellt wurde.

Dieses Herstellungsverfahren ist besonders vorteilhaft einzusetzen bei der Herstellung von Zahnschienen zum kieferorthopädischen Verschieben von Zähnen. Durch die Verwendung definiert elastischer Folien kann ein definierter und gut berechenbarer Druck auf die entsprechenden Zähne herbeigeführt werden.

Des Weiteren ist bevorzugt vorgesehen, dass zur Bestimmung der bestehenden Okklusions-Relation und/oder der therapeutischen Kieferrelation (Okklusions-Relation) ein Bewegungsablauf vorbestimmter Kieferbewegungen registriert wird und die intraoral aufgenommenen Scans der Zahnoberflächen mit den Positionsdaten zur Ableitung jeweiliger Hüllkurven der Zahnoberflächenpositionen des Unterkiefers und Oberkiefers verknüpft werden. Ein hierzu geeignetes Messsystem ist kommerziell verfügbar und wird beispielsweise von der Anmelderin unter dem Produktnamen "JMAnalyser+" angeboten. Von einer genaueren Beschreibung der Datengewinnung und -verarbeitung kann daher hier Abstand genommen werden.

In einer weiter bevorzugten Ausführung der Erfindung wird, zur Vermeidung der Herstellung von Zahnschienen, die vom Patienten als unbequem empfunden oder letztlich gar nicht genutzt werden, in die Bestimmung des erwähnten Verschiebungsbetrages ein Bewertungsschritt integriert. Es werden nämlich eine Serie vorbestimmter Kieferbewegungen ( Kieferpositionen) ausgeführt und Patienten-Feedback registriert, und die Patienten-Feedbacks werden einer Auswertung gemäß einem vorbestimmten Bewertungsalgorithmus zur Bestimmung des Verschiebungsbetrages gegenüber der Positions-Relation optimaler Okklusion unterzogen. Dies kann grundsätzlich allein aufgrund einer ärztlichen Bewertung erfolgen, es können aber vom Patienten in einzelnen Bewegungen gegebene Informationen ("schmerzt"/"schmerzt nicht") einbezogen werden.

In einer weiteren Ausführung wird mittels des Positions-bestimmungssystems entweder durch einen Zeigestift oder durch Bestimmung der Position des äußeren Gehörganges oder durch eine Rotationsbewegung des Unterkiefers, vorzugsweise das Rotationszentrum in der Mitte des linken und rechten Kondylus bezüglich einer schädelbezüglichen Referenzebene bestimmt. Danach kann die jeweilige Kondylenposition bzw. Relativposition bei den einzelnen Unterkieferbewegungen und Positionen erfasst werden.

Es ist in vielen Fällen erwünscht, dass sich die Kondylen-Gelenkköpfchen in der Okklusionsbeziehung nicht im ganz hinteren Bereich der Gelenkvertiefung befinden, sondern dass ein definierter Gelenkspalt erhalten bleibt. Durch das erfindungsgemäße Verfahren können während der Bestimmung des Verschiebungsbetrages der Zahnoberflächenpositionen die Relativpositionen der Kondylen bestimmt werden. Die Position zur Erstellung der Zahnschiene wird entsprechend nur dann verwendet, wenn sich die Kondylen-Gelenkköpfchen im Kiefergelenk um einen definierten Verschiebungsbetrag bewegt haben und sich in einer optimalen Position befinden.

In gleicher Weise kann über Patienten-Feedback eine Schmerzposition bestimmt werden wobei es bei der Erstellung der Zahnschiene dann darum geht, diese Schmerzposition der Kondylen zu vermeiden.

In einer besonderen Ausführungsform wird von der Positionsberechnungseinheit ein akustisches, visuelles oder haptisches Feedback-Signal an den Patienten und Behandler ausgegeben, wenn sich aus den Daten ergibt, dass eine optimale Kondylenposition erreicht ist. Alternativ kann ein Signal ausgegeben werden, solange die optimale Position nicht erreicht wurde oder sich die Kondylen in einer schmerzrelevanten Position befinden. Hierbei könnte sich die Tonhöhe oder Taktfrequenz eines Tonsignals ändern, wenn sich aus den Daten ergibt, dass die Kondylen in die Nähe der gewünschten Position kommen oder ein Lichtsignal kann sich in der Intensität oder Farbe ändern, oder der Patient kann auf einem Bildschirm die Positionen verfolgen oder mit einer Art Zielscheibe mit dem gewünschten Wert zur Deckung bringen. Ebenso ist es denkbar, dem Patienten eine Rückmeldung über ein Vibrationssignal zu geben.

Bei der Gestaltung der Zahnschiene ist neben der richtigen Kondylenposition aber auch die richtige Wandstärke der Zahnschiene, insbesondere an der Zahnoberseite, wichtig. Deshalb wird in einer weiteren Ausführungsform von der Positionsberechnungseinheit ein akustisches, visuelles oder haptisches Feedbacksignal ausgegeben, wenn sich aus den Daten ergibt, dass die Zahnschienenwandung eine gewünschte optimale Dicke hat.

Die Feedback-Informationen der optimalen Kondylenposition und der optimalen Dicke der Zahnschienenwandungen kann entweder separat oder in einem zusammengefassten Feedbacksignal erfolgen.

Die erfindungsgemäß hergestellte Zahnschiene kann zum einen als Unterkiefer-Schiene zur Fixierung auf dem Patienten-Unterkiefer und zum anderen auch als Oberkiefer-Schiene zur Fixierung auf dem Patienten-Oberkiefer ausgeführt sein.

Wenn sie mit einem koordinatengesteuerten abtragenden Bearbeitungsverfahren hergestellt wird, ist sie typischerweise im Wesentlichen ausgebildet aus einem Hartkunststoff (z.B. PMMA) oder einem Composite/Hybridkeramik (bestehend aus anorganischen Füllkörpern in einer Kunststoffmatrix) mit eingefrästen Ausformungs-Konfigurationen auf der Unterseite und Oberseite. Wird die Zahnschiene hingegen mit einem 3D-Druckverfahren hergestellt, ist sie typischerweise weitgehend gefertigt aus einem verschmolzenen thermoplastischen Pulver oder Granulat oder lichthärtenden Flüssigpolymeren (insbesondere einem bioverträglichen Photopolymeren), wobei die Ausformungs-Konfigurationen auf der Unterseite und Oberseite durch additive Formgebung ausgebildet sind.

Wie bereits weiter oben erwähnt, kann im Rahmen der Erfindung insbesondere auch ein Set von Zahnschienen bereitgestellt werden, wobei die Schienen des Sets verschiedene laterale und/oder frontal-dorsale und/oder vertikale sowie rotatorische Verschiebungsbeträge gegenüber der Positions-Relation optimaler Okklusion haben. Hiermit wird dem Patienten ein universelles Therapiehilfsmittel bereitbestellt, aus dem er eine seinem aktuellen Befinden und seinen aktuellen Bedürfnissen entsprechende Auswahl treffen und zugleich "Gewöhnungseffekten" oder sich steigernden Empfindungen der Unbequemlichkeit oder nachlassender therapeutischer Wirkung bei längerem Gebrauch ein und derselben Schiene entgegenwirken kann.

Zu bevorzugten Ausführungen der Zahnschiene als Produkt oder eines Sets von Aufbissschienen wird im Übrigen auf die Ausführungen zu den verschiedenen Ausprägungen des erfindungsgemäßen Verfahrens weiter oben verwiesen.

Vorteile und Zweckmäßigkeiten der Erfindung ergeben sich im Übrigen aus der nachfolgenden Beschreibung eines Ausführungsbeispiels anhand der Figuren. Von diesen zeigen:
- Fig. 1A-1E: schematische Darstellungen des Gebisses eines Patienten, einerseits im Zustand optimaler Okklusion, ohne Zahnschiene (Fig. 1A) und andererseits mit verschiedenen erfindungsgemäß gefertigten Zahnschienen (Fig. 1B-1E),
- Fig. 2: eine Prinzipskizze (Funktions-Blockschaltbild) eines Systems zur Gewinnung intraoraler Scans der Zahnoberflächen und von zugehörigen Positionsdaten,
- Fig. 3: eine perspektivische Darstellung eines in einem solchen System einzusetzenden paraokklusalen Bügels, und
- Fig. 4A bis 4D: skizzenartige Darstellungen von Schritten zur Herstellung einer erfindungsgemäßen Zahnschiene.

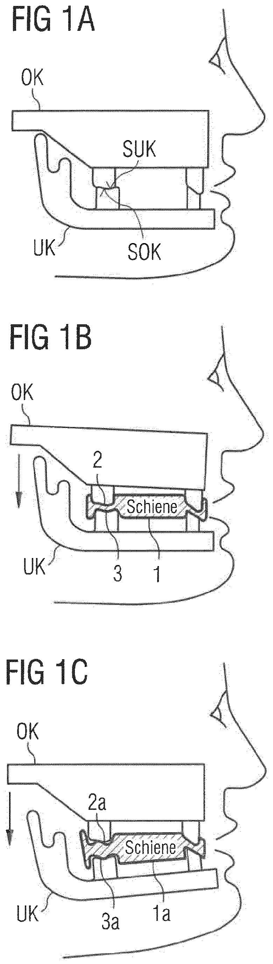

Die Fig. 1A-1E stellen zur Erläuterung wesentlicher Aspekte einer erfindungsgemäß hergestellten Zahnschiene schematische Darstellungen des Oberkiefers OK und Unterkiefers UK eines Patienten dar, bei dem zur Behandlung von Funktionsstörungen des Kiefergelenks eine Schienentherapie mit Zahnschienen durchgeführt wird.

Hierbei zeigt Fig. 1A den Zustand optimaler Okklusion, also des schließenden Ineinandergreifens der Zahnoberflächen SOK des Oberkiefers und der Zahnoberflächen SUK des Unterkiefers. Ist diese Position aus klinischer Sicht nicht vorteilhaft, z.B. schmerzhaft, wird mit Hilfe einer Zahnschiene das Kiefergelenk in eine therapeutisch gewünschte Position re-positioniert. Hierfür bestehen, je nach patientenspezifischer Funktionsstörung und insbesondere auch abhängig von Schmerzempfindungen des Patienten, regelmäßig mehrere Optionen, zwischen denen im Therapieverlauf bedarfsweise auch "umgeschaltet" werden kann.

So zeigt Fig. 1B die Kieferstellung mit einer eingesetzten Zahnschiene 1, einer sog. Distraktionsschiene, die den Unterkiefer (parallel zur Okklusionsebene) leicht nach unten verlagert. Abgesehen davon, dass selbstverständlich auch die Zahnschiene 1 eine gewisse Dicke hat, korrespondiert die Position einer Ausformungs-Konfiguration 2 auf der Oberseite, die weitgehend dem Zahnoberflächenprofil des Oberkiefers OK entspricht, bezüglich der Ausformungs-Konfiguration 3 auf der Unterseite der Positions-Relation optimaler Okklusion.

Fig. 1C zeigt eine andere Zahnschiene 1a, die ebenfalls als Distraktionsschiene bezeichnet werden kann, den Unterkiefer aber im hinteren Bereich weiter nach unten verlagert als die Zahnschiene 1 aus Fig. 1B. Es gibt hier also zwischen der Ausformungs-Konfiguration 2a auf der Oberseite und der Ausformungs-Konfiguration 3a auf der Unterseite einen vertikalen Verschiebungsbetrag im hinteren Bereich der Schiene 1a. Da die Schiene 1a im Grunde eine Verkippung der Ausformungs-Konfigurationen gegenüber der Position optimaler Okklusion bewirkt, gibt es auch einen (kleinen) frontal-dorsalen Verschiebungsbetrag.

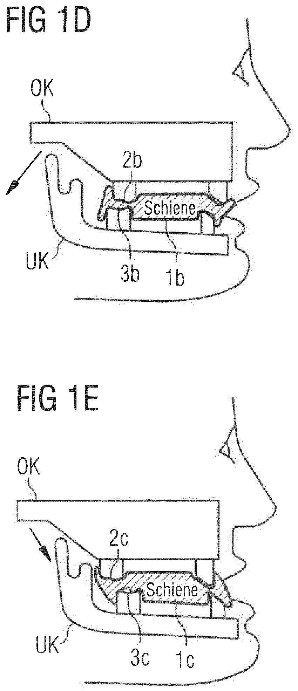

Fig. 1D zeigt schematisch die Kieferstellung mit einer weiteren eingesetzten Zahnschiene 1b, die als Retrusions-/Distraktions-Schiene bezeichnet werden kann und den Unterkiefer leicht nach unten/hinten verlagert. Zwischen der Ausformungs-Konfiguration 2b auf der Oberseite und der Ausformungs-Konfiguration 3b auf der Unterseite der Schiene 1b gibt es also sowohl einen vertikalen als auch frontal-dorsalen Verschiebungsbetrag, bezogen auf die Position optimaler Okklusion (Fig. 1A).

Fig. 1E zeigt als weitere Variante eine Zahnschiene 1c, die als Protrusions-Schiene bezeichnet werden kann und Unterkiefer leicht nach vorn verlagert. Zwischen der Ausformungs-Konfiguration 2c auf der Oberseite und der Ausformungs-Konfiguration 3c auf der Unterseite der Zahnschiene 1c gibt es also einen signifikanten frontal-dorsalen, aber keinen wesentlichen vertikalen Versch iebu ngsbetrag.

Neben den hier beispielhaft gezeigten Konfigurationen gibt es zahlreiche andere, und grundsätzlich können auch Zahnschienen therapeutisch sinnvoll sein, bei denen zwischen den Ausformungs-Konfigurationen auf der Oberseite und Unterseite ausschließlich oder zusätzlich zu einem vertikalen oder frontal-dorsalen Verschiebungsbetrag ein lateraler (rechts-links) Verschiebungsbetrag vorhanden ist, so dass die Unterkieferzähne gegenüber den Oberkieferzähnen entsprechend seitlich verlagert werden.

Insbesondere können diese therapeutischen Maßnahmen kombiniert werden mit der Maßnahme, gleichzeitig kieferorthopädische Fehlstellungen von Zähnen zu korrigieren und einen kontinuierlichen Druck auf die Zähne auszuüben um damit eine Verschiebung bis zu einer gewünschten Zahnposition zu erreichen.

Die in Fig. 1B-1E schematisch gezeigten Zahnschienen können jeweils einzeln als Therapiehilfsmittel bereitgestellt werden, oder es kann aus ihnen (und ggf. anderen und/oder weiteren) ein Set von Zahnschienen gebildet sein.

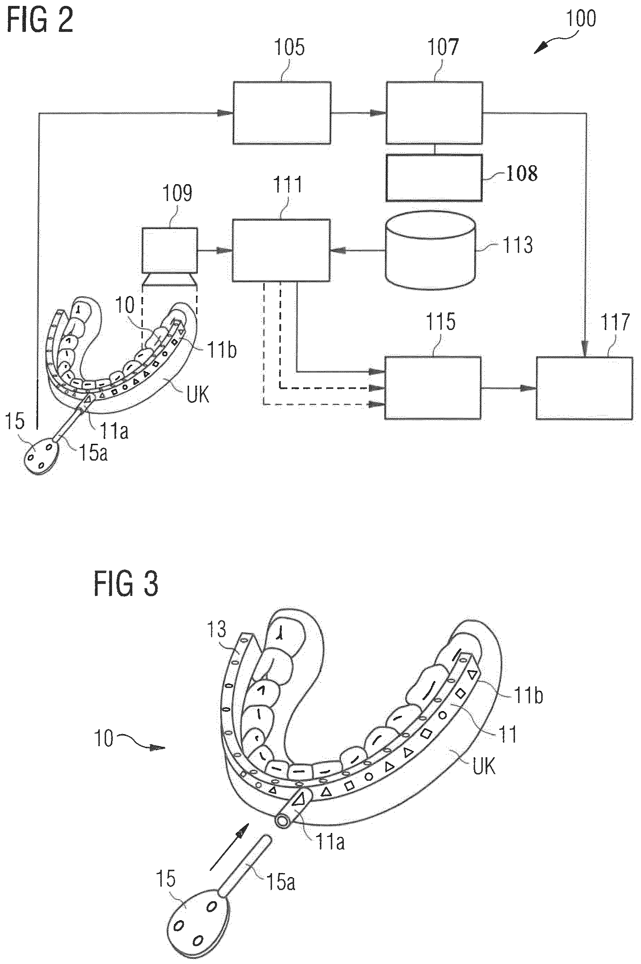

Fig. 2 zeigt als Prinzipskizze wesentliche Teile eines Systems 100 zur Bewegtbild-Erfassung/-Darstellung des Gebisses eines Patienten unter Einsatz eines speziellen paraokklusalen Bügels 10, wie in Fig. 3 skizzenartig gezeigt.

Das System umfasst eine Positionssignal-Erfassungseinheit 105 und eine Positionsberechnungseinheit 107, die die Positionssignale von einem Positionsmarker-Teil 15 des Bügels 10 in seinem in den Mund eines Patienten eingesetzten Zustand auswerten. Ergebnis ist ein Positionsdatensatz des Bügels, der genau diejenige Position des Bügels bezüglich eines raumfesten Koordinatensystems repräsentiert, in der Scans des Unter- und/oder Oberkiefers erzeugt wurden.

Mittels eines intraoralen Scanners 109 werden in einem durch den Erfassungsbereich 109a des Scanners festgelegten Teilbereich der Gesamterstreckung des Bügels die Zahnoberflächen optisch erfasst, und der zugehörige Bilddatensatz wird gespeichert. Er umfasst Bilddaten der (in dieser Figur nicht vollständig dargestellten) Markierungen an den Rändern des Kopplungslöffels, die im Erfassungsbereich 109a liegen. Aus einer Datenbasis 111 wird ein vorab erzeugter und gespeicherter Bilddatensatz des gesamten Bügels in eine Vergleichs-Verarbeitungseinheit 113 geladen und dort einer Vergleichs-Verarbeitung mit dem Bilddatensatz des Erfassungsbereiches 109a unterzogen. Hierbei werden die im Erfassungsbereich liegenden Markierungen als Teilmenge aller an dem Kopplungslöffel vorgesehenen Markierungen identifiziert, und aufgrund dieser Identifizierung sind der Erfassungsbereich 109a und mithin die in diesem liegenden Impressionen 101a positionsmäßig präzise bezüglich des Bügels 10 zuzuordnen.

Zusammen mit den zugehörigen (relativen) Positionskoordinaten gelangt das im Erfassungsbereich 109a gewonnene Abbild in eine Gesamtbild-Synthesestufe 115, in der es zusammen mit dem in anderen Teilbereichen durch den Scanner gewonnenen Abbildern (Teilbildern) unter Zugrundelegung der jeweiligen relativen Positionskoordinaten zu einem Zahnoberflächen-Gesamtbild verarbeitet wird.

Sowohl das mit den relativen Positionskoordinaten versehene Teilbild als auch das Zahnoberflachen-Gesamtbild können anhand der in der Positionsberechnungseinheit 107 gewonnenen (absoluten) Positionskoordinaten der Bissgabel auf ein raumfestes Koordinatensystem bezogen werden. In der

Figur ist dies für das Zahnoberflächen-Gesamtbild dargestellt, das am Ausgang der Gesamtbild-Synthesestufe 115 bereitgestellt wird. Es wird mit den am Ausgang der Positionsberechnungseinheit 107 bereitstehenden Positionskoordinaten einer zusammenfassenden Verarbeitung in einer Bild/Koordinaten-Zuordnungsstufe 117 unterzogen. Das Ergebnis ist ein absolut koordinatengetreues Zahnoberflächen-Gesamtbild, das in dem erfindungsgemäßen Verfahren (als Steuerdatensatz), aber auch für Visualisierungen zahnmedizinischer Befunde und sonstiger Maßnahmen genutzt werden kann.

Fig. 3 zeigt den frontal auf die gesamte Zahnreihe des Unterkiefers UK eines Patienten aufgesetzten paraokklusalen Bügel 10, der an den Zähnen mittels eines vorzugsweise elastischen oder hartelastischen hinreichend haftfähigen Registriermaterials oder Klebstoffs 13 fixiert ist. In zentraler Position des Bügel-Grundkörpers 11 ist an diesem eine rechtwinklig nach vorn abstehende Montagehülse 11a angeordnet, die passfähig für einen Montagestift 15a des am Bügel-Grundkörper 11 zu befestigenden Sensorik-Teils 15 ist. Die Befestigung erfolgt bei dieser vereinfacht dargestellten Ausführung durch Einschieben des Stiftes 15a in die Hülse 11a und reibschlüssige (bzw formschlüssig) Fixierung des Stiftes in der Hülse. Zweckmäßigerweise ist in der Praxis die Stift-Hülse-Anordnung mit Ausformungen zur Vorgabe einer definierten Winkellage des Sensorik-Teils 15 bezüglich des Bügel-Grundkörpers 11 (etwa einer Nut-FederAnordnung) versehen, die aber in der Figur nicht gezeigt ist.

An der Oberseite und Vorderseite des Bügel-Grundkörpers 11 sind unterschiedliche Markierungen 11b vorgesehen, die für einen intraoralen Scanner leicht lesbar und bei der Auswertung eines Scans leicht unterscheidbar sind. Die Markierungen, die hier als unterschiedliche Symbole dargestellt sind, aber auch farbig oder als Erhöhungen/Vertiefungen o.ä. ausgebildet sein können, erlauben es, bei einem Scan aufgenommene Abschnitte des Bügel-Grundkörpers 11 und somit auf die jeweils abgebildeten Zähne eindeutig einer Position bezüglich des Unterkiefers zuzuordnen.

Der Bügel-Grundkörper 11 ist als Formteil, etwa als Kunststoff-Spritzgussteil (etwa aus einem Polyamid oder ABS oder einem sonstigen physiologisch unbedenklichen Polymer) oder auch als Metall-Gussteil (etwa aus einer Aluminiumlegierung), hergestellt. Es kann sich auch um ein Kunststoff-Formteil mit eingelegter Metallarmierung oder um eine andere Art Formteil handeln. Das Formteil kann teilweise oder Insgesamt aus einem transparenten Material bestehen, welches es erlaubt, zugleich mit den Markierungen auf Zahnoberflächen aufzunehmen.

Das Messsensorik-Teil 15 ist in Fig. 3 lediglich symbolisch dargestellt; es kann eine (als solche bekannte) Anordnung von Sendern oder Sensoren oder Reflektoren eines Ultraschall-Positionsbestimmungssystems aufweisen.

Wie weiter oben bereits angemerkt, kann das vorstehend erläuterte System auch dazu genutzt werden, sequenziell Bewegtbild-Aufnahmen (bzw. entsprechende koordinatentreue Datensätze der Zahnoberflächen von Unter- und Oberkiefer) bei verschiedenen Gebissbewegungen des Patienten aufzuzeichnen und hieraus Einhüllende der Bewegungskurven zu gewinnen, die letztlich für die Herstellung der Ausformungs-Konfigurationen auf der Oberseite und Unterseite der Aufbissschiene herangezogen werden.

Die Berücksichtigung vorbestimmter Verschiebungsbeträge kann, wie ebenfalls bereits angemerkt, einen Schritt eines vom Patienten gelieferten Feedback hinsichtlich schmerzbehafteter oder schmerzfreier Relativpositionen umfassen, wobei dem Patienten-Feedback hier jeweils genaue Positionsdaten bzw. koordinatengenaue Bilddatensätze zugeordnet werden können.

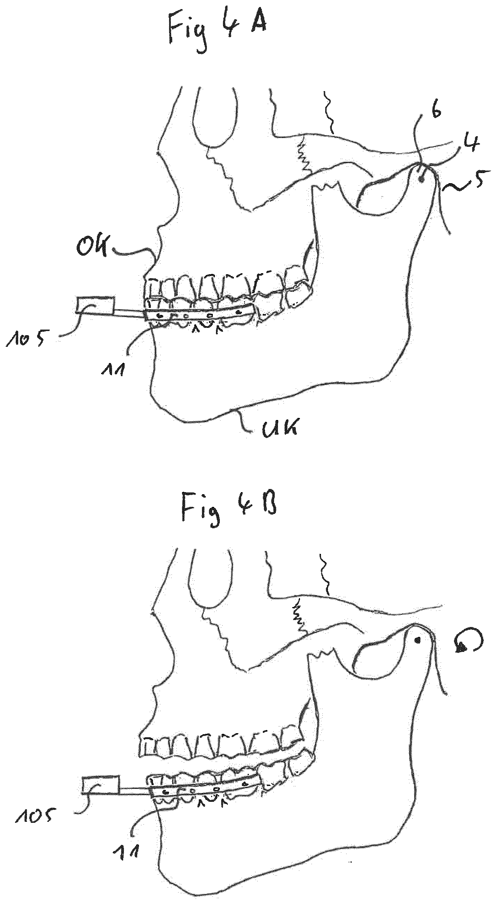

Fig. 4A-4D zeigen eine stark vereinfachte Darstellung eines menschlichen Ober- und Unterkiefers mit Kiefergelenk, wobei in Fig. 4A bis 4C drei verschiedene Unterkieferpositionen mit entsprechender Zahnsituation und Kondylenposition dargestellt sind.

An den Unterkieferzähnen ist jeweils die Positionssignal-Erfassungseinheit 105 über eine entsprechende Halterung 11 angebracht. Wie weiter oben beschrieben, kann die Erfassungseinheit 105 optische, akustische, magnetische oder Inertialsensoren beinhalten und benötigt gegebenenfalls noch eine (hier nicht dargestellte) stationäre oder am Kopf oder Oberkiefer befestigte Sende- oder Empfangseinheit.

Fig. 4A zeigt die Zähne des Ober- und Unterkiefers in Okklusion, wobei das Kondylen-Gelenkköpfchen 6 sich im hinteren Bereich der Gelenkvertiefung (Fossa Mandibularis) 5 befindet. Die Mitte der Kondylen 4 kann vom Positionsmesssystem beispielsweise über eine Rotationsbewegung erfasst (wie in Fig. 4B gezeigt) und als Gelenkmittelpunkt oder Gelenkzentrum für die weiteren Berechnungen der Kondylenpositionen verwendet werden.

Die in den beiden Fig. 4A und 4B dargestellten Kondylenpositionen können durchaus unerwünscht sein und auch durch Abrasion der Zähne zustande kommen. Wie in Fig. 4B gezeigt, kann bei einer Öffnungsbewegung ein Verbleib der Gelenkköpfchen in der hinteren Position auftreten. In dieser Position würde gegebenenfalls eine für den Patienten nicht wirksame Schiene erstellt werden. Deshalb ist es bevorzugt, mit dem erfindungsgemäßen Verfahren eine Feedback-Kontrolle der Kondylenposition bei der Konstruktion der Zahnschienen vorzunehmen.

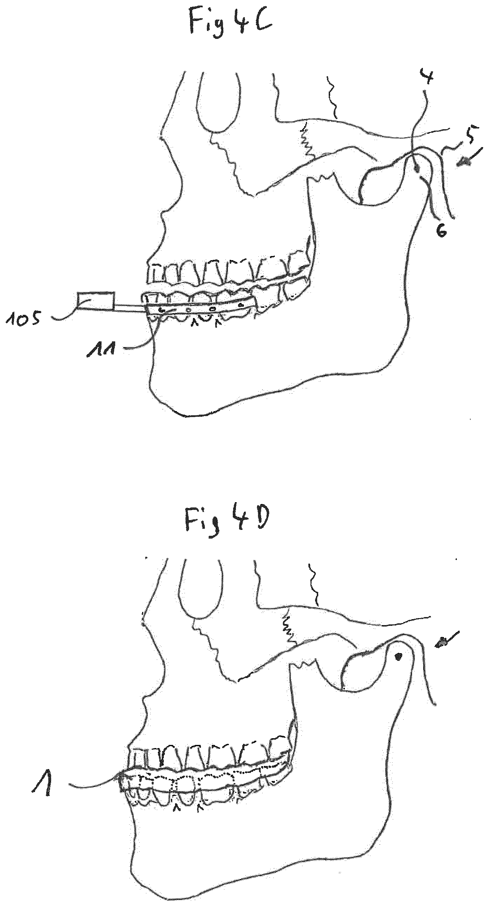

Fig. 4C zeigt eine gegebenenfalls gewünschte Kondylenposition sowie eine Zahnsituation, die sich mit einer Zahnschiene mit gewünschter Wandungsstärke einstellen würde, wobei sich der Kondylenmittelpunkt um einen translatorischen Betrag nach vorne bewegt und sich im hinteren Bereich ein Gelenkspalt gebildet hat. Zur Ermittlung einer definierten und optimalen Schienenwandstärke wird hierbei ebenfalls ein akustisches, visuelles oder haptischen Feedbackverfahren vorgeschlagen.

Fig. 4D zeigt eine aufgrund der in dieser Situation ermittelten Positionsdaten gefertigte Zahnschiene 1. Hierbei wird insbesondere vorgeschlagen, nicht (wie dargestellt) nur eine Zahnschiene, sondern ein Set von Schienen mit verschiedenen Schienenwandstärken zu erzeugen.

Die Ausführung der Erfindung ist nicht auf die oben hervorgehobenen Aspekte und erläuterten Beispiele beschränkt, sondern durch den Schutzumfang der folgenden Ansprüchen bestimmt.

## Patentansprüche

1. Verfahren zur Herstellung einer Zahnschiene, insbesondere zur Behandlung von craniomandibulärer Dysfunktion oder zur Korrektur von Zahnfehlstellungen, aufweisend einen Kunststoff-, Composite- und/oder Elastomer-Flächenkörper mit einer Unterseite, die mit einer Ausformungs-Konfiguration gemäß mindestens Abschnitten des Zahnoberflächenprofils eines Patienten-Unterkiefers versehen ist, und einer Oberseite, die mit einer Ausformungs-Konfiguration gemäß mindestens Abschnitten des Zahnoberflächenprofils des Patienten-Oberkiefers versehen ist, wobei die Ausformungs-Konfiguration auf der Oberseite gegenüber einer Positions-Relation optimaler Okklusion zu der Ausformungs-Konfiguration auf der Unterseite einen definierten lateralen und/oder frontal-dorsalen und/oder vertikalen Verschiebungsbetrag aufweist, wobei die Zahnoberflächen des Unterkiefers und Oberkiefers eingescannt werden, in der Position optimaler Okklusion mittels eines Positionsbestimmungssystems eine Okklusions-Lagebeziehung zwischen Unterkiefer und Oberkiefer und somit eine Okklusions-Relation zwischen den Datensätzen der zugehörigen Scans bestimmt wird, in einer von der Okklusion verschiedenen Position mittels eines Positionsbestimmungssystems eine Nicht-Okklusions-Lagebeziehung zwischen Unterkiefer und Oberkiefer und somit eine Nicht-Okklusions-Relation zwischen den Datensätzen der zugehörigen Scans bestimmt wird, aus den Datensätzen der Okklusions-Relation und der Nicht-Okklusions-Relation der vorbestimmte laterale und/oder dorsale und/oder vertikale Verschiebungsbetrag bestimmt wird und mindestens Abschnitte der aufgenommenen Scans, unter Berücksichtigung des vorbestimmten lateralen und/oder dorsalen und/oder vertikalen Verschiebungsbetrages mittels eines koordinatengesteuerten, abtragenden Bearbeitungsverfahrens, insbesondere eines Fräsverfahrens, aus einem Grund-Flächenkörper der Aufbissschiene auf der Unterseite bzw. Oberseite als Ausformungs-Konfigurationen herausgearbeitet werden.

2. Verfahren zur Herstellung einer Zahnschiene, insbesondere zur Behandlung von craniomandibulärer Dysfunktion oder zur Korrektur von Zahnfehlstellungen, aufweisend einen Kunststoff-, Composite- und/oder Elastomer-Flächenkörper mit einer Unterseite, die mit einer Ausformungs-Konfiguration gemäß mindestens Abschnitten des Zahnoberflächenprofils eines Patienten-Unterkiefers versehen ist, und einer Oberseite, die mit einer Ausformungs-Konfiguration gemäß mindestens Abschnitten des Zahnoberflächenprofils des Patienten-Oberkiefers versehen ist,
wobei die Ausformungs-Konfiguration auf der Oberseite gegenüber einer Positions-Relation optimaler Okklusion zu der Ausformungs-Konfiguration auf der Unterseite einen definierten lateralen und/oder frontal-dorsalen und/oder vertikalen Verschiebungsbetrag aufweist, wobei die Zahnoberflächen des Unterkiefers und Oberkiefers intraoral direkt eingescannt werden, in der Position optimaler Okklusion mittels eines Positionsbestimmungs-systems eine Okklusions-Lagebeziehung zwischen Unterkiefer und Oberkiefer und somit eine Okklusions-Relation zwischen den Datensätzen der zugehörigen Scans bestimmt wird, in einer von Okklusion verschiedenen Position mittels des Positionsbestimmungssystems eine Nichtokklusions-Lagebeziehung zwischen Unterkiefer und Oberkiefer und somit eine Nichtokklusions-Relation zwischen den Datensätzen der zugehörigen Scans bestimmt wird, aus den Datensätzen der Okklusions-Relation und der Nichtokklusions-Relation der vorbestimmte laterale und/oder dorsale und/oder vertikale Verschiebungsbetrag bestimmt wird und die Zahnschiene, unter Berücksichtigung des vorbestimmten lateralen und/oder dorsalen und/oder vertikalen Verschiebungsbetrages, mittels eines additiven Herstellungsverfahrens aufgrund der Scans mindestens von Abschnitten der Zahnoberflächen des Unterkiefers und Oberkiefers aufgebaut wird.

3. Verfahren nach Anspruch 2, wobei die Aufbissschiene mittels eines 3D-Kunststoffdruckverfahrens mit den vollständigen Datensätzen der Scans der Zahnoberflächen des Unterkiefers und Oberkiefers gebildet wird.

4. Verfahren nach einem der vorangehenden Ansprüche, wobei die Zahnschiene auf einem aufgrund der aufgenommenen Scans, unter Berücksichtigung des vorbestimmten lateralen und/oder dorsalen und/oder vertikalen Verschiebungsbetrages, hergestellten Anpassungselement und einer thermoplastischen Folie gebildet wird, wobei in die Unterseite oder Oberseite der thermoplastischen Folie die Zahnoberflächen des Unterkiefers oder Oberkiefers direkt eingeformt werden und auf der anderen Seite der Folie das Anpassungselement fixiert wird.

5. Verfahren zur Herstellung einer Zahnschiene, insbesondere zur Behandlung von craniomandibulärer Dysfunktion oder zur Korrektur von Zahnfehlstellungen, aufweisend einen Kunststoff-, Composite- und/oder Elastomer-Flächenkörper mit einer Unterseite, die mit einer Ausformungs-Konfiguration gemäß mindestens Abschnitten des Zahnoberflächenprofils eines Patienten-Unterkiefers versehen ist, und einer Oberseite, die mit einer Ausformungs-Konfiguration gemäß mindestens Abschnitten des Zahnoberflächenprofils des Patienten-Oberkiefers versehen ist, wobei die Ausformungs-Konfiguration auf der Oberseite gegenüber einer Positions-Relation optimaler Okklusion zu der Ausformungs-Konfiguration auf der Unterseite einen definierten lateralen und/oder frontal-dorsalen und/oder vertikalen Verschiebungsbetrag aufweist, wobei die Zahnoberflächen des Unterkiefers und Oberkiefers eingescannt werden, in der Position optimaler Okklusion mittels eines Positionsbestimmungssystems eine Okklusions-Lagebeziehung zwischen Unterkiefer und Oberkiefer und somit eine Okklusions-Relation zwischen den Datensätzen der zugehörigen Scans bestimmt wird, in einer von der Okklusion verschiedenen Position mittels des Positionsbestimmungssystems eine Nicht-Okklusions-Lagebeziehung zwischen Unterkiefer und Oberkiefer und somit eine Nicht-Okklusions-Relation zwischen den Datensätzen der zugehörigen Scans bestimmt wird, aus den Datensätzen der Okklusions-Relation und der Nicht-Okklusions-Relation der vorbestimmte laterale und/oder dorsale und/oder vertikale bestimmt wird und mindestens Abschnitte der aufgenommenen Scans, unter Berücksichtigung des vorbestimmten lateralen und/oder dorsalen und/oder vertikalen Verschiebungsbetrages, mittels eines Druck-/Hitze-Formungsvorgang einer thermoplastischen Folie auf der Unterseite bzw. Oberseite als Ausformungs-Konfigurationen aufgeprägt werden.

6. Verfahren nach einem der vorangehenden Ansprüche, wobei zur Bestimmung des lateralen und/oder frontal-dorsalen und/oder vertikalen Verschiebungsbetrages eine Serie vorbestimmter Kieferbewegungen, insbesondere Öffnungs- und Vorschubbewegungen des Kiefers, ausgeführt und jeweils die zugehörige Kondylenposition und/oder ein Patienten-Feedback registriert und die Kondylen-Relativpositonen und/oder die Patienten-Feedbacks, insbesondere verknüpft miteinander, einer Auswertung gemäß einem vorbestimmten Bewertungsalgorithmus unterzogen werden.

7. Verfahren nach Anspruch 6, wobei insbesondere Öffnungs- und VorschubBewegungen des Kiefers ausgeführt werden und die zugehörigen Kondylen-Relativpositionen registriert werden, wobei die Bestimmung des lateralen und/oder frontal-dorsalen und/oder vertikalen Verschiebungsbetrages dann erfolgt, wenn die Positionen der Kondyen bzw. der Kondylenmittelpunkte zur Ausgangs-Relativposition um einen definierten translatorischen Betrag geändert wurden.

8. Verfahren nach einem der vorangehenden Ansprüche, wobei vom Positionsbestimmungs-system ein akustischen, optisches oder haptischen Signal abgegeben wird, wenn, während der Bewegung des Unterkiefers, die Kondylenposition und/oder die Wandstärke der Schiene sich im oder außerhalb eines definierten Bereichs befindet oder sich auf diesen zu- oder wegbewegt und/oder einen vordefinierten Betrag erreicht hat.

9. Verfahren nach einem der vorangehenden Ansprüche, wobei zur Bestimmung der Okklusions-Relation optimaler Okklusion und/oder der Nichtokklusions-Relation ein Bewegungsablauf vorbestimmter Kieferbewegungen, insbesondere Öffnungsbewegungen des Kiefers, registriert wird und die aufgenommenen Scans der Zahnoberflächen mit den erfassten Positionsdaten zur Ableitung jeweiliger Hüllkurven der Zahnoberflächenpositionen des Unterkiefers und Oberkiefers verknüpft werden.

10. Verfahren nach einem der vorangehenden Ansprüche, wobei die Zahnoberflächen des Unterkiefers und Oberkiefers intraoral eingescannt werden und eine Okklusions-Relation zwischen den Datensätzen der intraoralen Scans von Oberkiefer und Unterkiefer bestimmt wird.

11. Zahnschiene, hergestellt mit einem Verfahren nach einem der vorangehenden Ansprüche, unter Berücksichtigung des vorbestimmten lateralen und dorsalen und vertikalen Verschiebungsbetrages.

12. Zahnschiene nach Anspruch 11, ausgebildet als Unterkiefer-Schiene zur Fixierung auf dem Patienten-Unterkiefer, wobei die Ausformungs-Konfiguration auf der Unterseite im Wesentlichen gemäß dem totalen Zahnoberflächenprofil des Patienten-Unterkiefers konturiert ist.

13. Zahnschiene nach Anspruch 11, ausgebildet als Oberkiefer-Schiene zur Fixierung auf dem Patienten-Oberkiefer, wobei die Ausformungs-Konfiguration auf der Unterseite im Wesentlichen gemäß dem totalen Zahnoberflächenprofil des Patienten-Oberkiefers konturiert ist.

14. Zahnschiene nach einem der Ansprüche 11 bis 13, im Wesentlichen ausgebildet aus einem Hartkunststoff mit eingefrästen Ausformungs-Konfigurationen auf der Unterseite und Oberseite.

15. Zahnschiene nach einem der Ansprüche 11 bis 13, gefertigt aus einem verschmolzenen thermoplastischen Pulver oder Granulat oder lichthärtenden Flüssigpolymeren, wobei die Ausformungs-Konfigurationen auf der Unterseite und Oberseite durch additive Formgebung ausgebildet sind.

16. Zahnschiene nach einem der Ansprüche 11 bis 13, gefertigt aus einer thermoplastischen Folie, wobei die Ausformungs-Konfigurationen auf der Unterseite und Oberseite durch eine Druck-/Hitze-Formungsvorgang und/oder mittels eines aufgesetzten, durch ein Fräsverfahren oder additive Formgebung gefertigten Anpassungselementes auf mindestens einer der Unterseite und Oberseite gebildet sind.

17. Set von Zahnschienen nach einem der Ansprüche 11 bis 16, wobei die Aufbissschienen des Sets verschiedene laterale und/oder frontal-dorsale und/oder vertikale Verschiebungsbeträge gegenüber der Positions-Relation optimaler Okklusion und/oder mindestens abschnittsweise unterschiedliche Dicke haben.

## Claims

1. A method for producing a dental splint, in particular for the treatment of craniomandibular dysfunction or for the correction of tooth misalignment, comprising a flat body made of plastics, composite and/or elastomer and having a lower face that is provided with a shape configuration according to at least portions of the dental surface profile of a patient's lower jaw, and an upper face that is provided with a shape configuration according to at least portions of the dental surface profile of a patient's upper jaw, the shape configuration having a defined lateral and/or frontal-dorsal and/or vertical offset amount on the upper face relative to a position relation of optimum occlusion with respect to the shape configuration on the lower face, wherein the dental surfaces of the lower jaw and the upper jaw are scanned, in the position of optimum occlusion, an occlusion position relation between the lower jaw and the upper jaw is determined by means of a position determination system, and thus an occlusion relation between the data sets of the associated scans, in a position different from the occlusion, a non-occlusion position relation between the lower jaw and the upper jaw is determined by means of a position determination system, and thus an non-occlusion relation between the data sets of the associated scans, from the data sets of the occlusion relation and the non-occlusion relation, the predetermined lateral and/or dorsal and/or vertical offset amount is determined, and at least portions of the taken scans, while taking into account the predetermined lateral and/or dorsal and/or vertical offset amount, are worked out by means of a coordinate-controlled, abrasive processing method, in particular a milling method, from a basic sheet body of the occlusion splint on the lower face or the upper face as shape configurations.

2. A method for producing a dental splint, in particular for the treatment of craniomandibular dysfunction or for the correction of tooth misalignment, comprising a flat body made of plastics, composite and/or elastomer and having a lower face that is provided with a shape configuration according to at least portions of the dental surface profile of a patient's lower jaw, and an upper face that is provided with a shape configuration according to at least portions of the dental surface profile of a patient's upper jaw, the shape configuration having a defined lateral and/or frontal-dorsal and/or vertical offset amount on the upper face relative to a position relation of optimum occlusion with respect to the shape configuration on the lower face,, wherein the dental surfaces of the lower jaw and the upper jaw are directly scanned intraorally, in the position of optimum occlusion, an occlusion position relation between the lower jaw and the upper jaw is determined by means of a position determination system, and thus an occlusion relation between the data sets of the associated scans, in a position different from occlusion, a non-occlusion position relation between the lower jaw and the upper jaw is determined by means of the position determination system, and thus an non-occlusion relation between the data sets of the associated scans, from the data sets of the occlusion relation and the non-occlusion relation, the predetermined lateral and/or dorsal and/or vertical offset amount is determined, and the dental splint is built up on the basis of the scans while taking into account the predetermined lateral and/or dorsal and/or vertical offset amount by means of an additive production method at least of portions of the dental surfaces of the lower jaw and the upper jaw.

3. The method according to claim 1, wherein the occlusal splint is formed by means of a 3D plastic printing method with the complete data sets of the scans of the dental surfaces of the lower jaw and the upper jaw.

4. The method according to any one of the preceding claims, wherein the dental splint is formed on an adaptation element produced on the basis of the taken scans and a thermoplastic film while taking into account the predetermined lateral and/or dorsal and/or vertical offset amount, wherein into the lower face or the upper face of the thermoplastic film, the dental surfaces of the lower jaw or the upper jaw are directly formed, and the adaptation element is fixed to the other side of the film.

5. A method for producing a dental splint, in particular for the treatment of craniomandibular dysfunction or for the correction of tooth misalignment, comprising a flat body made of plastics, composite and/or elastomer and having a lower face that is provided with a shape configuration according to at least portions of the dental surface profile of a patient's lower jaw, and an upper face that is provided with a shape configuration according to at least portions of the dental surface profile of a patient's upper jaw, the shape configuration having a defined lateral and/or frontal-dorsal and/or vertical offset amount on the upper face relative to a position relation of optimum occlusion with respect to the shape configuration on the lower face,, wherein the dental surfaces of the lower jaw and the upper jaw are scanned, in the position of optimum occlusion, an occlusion position relation between the lower jaw and the upper jaw is determined by means of a position determination system, and thus an occlusion relation between the data sets of the associated scans, in a position different from the occlusion, a non-occlusion position relation between the lower jaw and the upper jaw is determined by means of the position determination system, and thus an non-occlusion relation between the data sets of the associated scans,
from the data sets of the occlusion relation and the non-occlusion relation, the predetermined lateral and/or dorsal and/or vertical offset amount is determined, and at least portions of the taken scans, while taking into account the predetermined lateral and/or dorsal and/or vertical offset amount, are imprinted by means of a pressure/heat shaping process onto a thermoplastic film on the lower face or the upper face as shape configurations.

6. The method according to any one of the preceding claims, wherein for determining the lateral and/or frontal-dorsal and/or vertical offset amount, a series of predetermined jaw movements, in particular opening and forward feed movements of the jaw are performed, and in each case the associated condyle relative position and/or a patient's feedback are registered and the condyle relative position, in particular interlinked with each other, are subjected to an evaluation according to a predetermined evaluation algorithm.

7. The method according to claim 6, wherein in particular opening and forward feed movements of the jaw are performed, and the associated condyle relative positions are registered, wherein the determination of the lateral and/or frontal-dorsal and/or vertical offset amount is performed when the positions of the condyles or condyle centers have been changed with respect to the initial relative position by a defined translatory amount.

8. The method according to any one of the preceding claims, wherein an acoustic, visual or haptic signal is emitted by the position determination system when, during a movement of the lower jaw, the condyle position and/or the wall thickness of the splint is in or outside of a defined area or moves toward or away from it and/or has reached a predefined amount.

9. The method according to any one of the preceding claims, wherein for determining the occlusion relation of optimum occlusion and/or the non-occlusion relation, a sequence of movements of predetermined jaw movements, in particular opening movements of the jaw, is registered, and the taken scans of the dental surfaces are interlinked with the detected position data for deriving respective envelopes of the dental surface positions of the lower jaw and the upper jaw.

10. The method according to any one of the preceding claims, wherein the dental surfaces of the lower jaw and the upper jaw are scanned intraorally, and an occlusion relation between the data sets of the intraoral scans of the upper jaw and the lower jaw is determined.

11. A dental splint produced by a method according to any one of the preceding claims, taking into consideration the predetermined lateral and dorsal and vertical displacement amount.

12. The dental splint according to claim 11, formed as a lower jaw splint for being fixed onto the patients' lower jaw, wherein the shape configuration on the lower face substantially is contoured according to the total dental surface profile of the patients' lower jaw.

13. The dental splint according to claim 11, formed as an upper jaw splint for being fixed onto the patients' upper jaw, wherein the shape configuration on the lower face substantially is contoured according to the total dental surface profile of the patients' upper jaw.

14. The dental splint according to any one of claims 11 to 13, substantially formed from rigid plastic with a shape configuration milled into the lower face and the upper face.

15. The dental splint according to any one of claims 11 to 13, manufactured from a fused thermoplastic powder or granulate or light-curing liquid polymers, wherein the shape configurations on the lower face or the upper face are formed by additive molding.

16. The dental splint according to any one of claims 11 to 13, manufactured from a thermoplastic film, wherein the shape configurations on the lower face or the upper face are formed by a pressure/heat shaping process and/or by means of an adaptation element placed upon and manufactured by a milling process or additive molding onto at least one of the lower face and the upper face.

17. A set of dental splints according to any one of claims 11 to 16, wherein the occlusal splints of the set have different lateral and/or frontal-dorsal and/or vertical offset amounts with respect to the position relation of optimum occlusion and/or have a different thickness at least in portions.

## Revendications

1. Procédé de fabrication d'une gouttière dentaire, en particulier pour le traitement d'un dysfonctionnement cranio-mandibulaire ou pour la correction de malpositions dentaires, présentant un corps de surface en matière plastique, composite et/ou élastomère avec une face inférieure qui est pourvue d'une configuration de façonnage selon au moins des parties du profil de surface dentaire d'une mâchoire inférieure d'un patient, et une face supérieure qui est pourvue d'une configuration de façonnage selon au moins des parties du profil de surface dentaire de la mâchoire supérieure du patient, la configuration de façonnage sur la face supérieure présentant une amplitude de déplacement latéral et/ou frontal-dorsal et/ou vertical définie par rapport à une relation de position d'occlusion optimale par rapport à la configuration de façonnage sur la face inférieure, les surfaces dentaires de la mâchoire inférieure et de la mâchoire supérieure étant scannées, dans la position d'occlusion optimale, une relation de position d'occlusion entre la mâchoire inférieure et la mâchoire supérieure et donc une relation d'occlusion entre les jeux de données des scans correspondants étant déterminée au moyen d'un système de détermination de position, dans une position différente de l'occlusion, une relation de position de non-occlusion entre la mâchoire inférieure et la mâchoire supérieure et donc une relation de non-occlusion entre les jeux de données des scans correspondants étant déterminée au moyen d'un système de détermination de position, à partir des jeux de données de la relation d'occlusion et de la relation de non-occlusion, l'amplitude de déplacement latéral et/ou dorsal et/ou vertical prédéterminée étant déterminée et au moins des sections des scans enregistrés, en tenant compte de l'amplitude de déplacement latéral et/ou dorsal et/ou vertical prédéterminée, étant élaborées au moyen d'un procédé d'usinage par enlèvement de matière commandé par coordonnées, en particulier un procédé de fraisage, à partir d'un corps de surface de base de la gouttière occlusale sur la face inférieure ou la face supérieure, en tant que configurations de façonnage.

2. Procédé de fabrication d'une gouttière dentaire, en particulier pour le traitement d'un dysfonctionnement cranio-mandibulaire ou pour la correction de malpositions dentaires, présentant un corps de surface en matière plastique, composite et/ou élastomère avec une face inférieure qui est pourvue d'une configuration de façonnage selon au moins des parties du profil de surface dentaire d'une mâchoire inférieure d'un patient, et une face supérieure qui est pourvue d'une configuration de façonnage selon au moins des parties du profil de surface dentaire de la mâchoire supérieure du patient,
la configuration de façonnage sur la face supérieure présentant une amplitude de déplacement latéral et/ou frontal-dorsal et/ou vertical définie par rapport à une relation de position d'occlusion optimale par rapport à la configuration de façonnage sur la face inférieure, les surfaces dentaires de la mâchoire inférieure et de la mâchoire supérieure étant scannées directement en intra-oral, dans la position d'occlusion optimale, une relation de position d'occlusion entre la mâchoire inférieure et la mâchoire supérieure et donc une relation d'occlusion entre les jeux de données des scans correspondants étant déterminée au moyen d'un système de détermination de position, dans une position différente de l'occlusion, une relation de position de non-occlusion entre la mâchoire inférieure et la mâchoire supérieure et donc une relation de non-occlusion entre les jeux de données des scans correspondants étant déterminée au moyen du système de détermination de position, l'amplitude de déplacement latéral et/ou dorsal et/ou vertical prédéterminée étant déterminée à partir des jeux de données de la relation d'occlusion et de la relation de non-occlusion et la gouttière dentaire étant construite au moyen d'un procédé de fabrication additive sur la base des scans d'au moins des sections des surfaces dentaires de la mâchoire inférieure et de la mâchoire supérieure, en tenant compte de l'amplitude de déplacement latéral et/ou dorsal et/ou vertical prédéterminée.

3. Procédé selon la revendication 2, dans lequel la gouttière occlusale est formée au moyen d'un procédé d'impression plastique 3D avec les jeux de données complets des scans des surfaces dentaires de la mâchoire inférieure et de la mâchoire supérieure.

4. Procédé selon l'une quelconque des revendications précédentes, dans lequel la gouttière dentaire est formée sur un élément d'adaptation fabriqué sur la base des scans enregistrés, en tenant compte de l'amplitude de déplacement latéral et/ou dorsal et/ou vertical prédéterminée, et d'une feuille thermoplastique, les surfaces dentaires de la mâchoire inférieure ou de la mâchoire supérieure étant directement formées dans la face inférieure ou la face supérieure de la feuille thermoplastique et l'élément d'adaptation étant fixé sur l'autre face de la feuille.

5. Procédé de fabrication d'une gouttière dentaire, en particulier pour le traitement d'un dysfonctionnement cranio-mandibulaire ou pour la correction de malpositions dentaires, présentant un corps de surface en matière plastique, composite et/ou élastomère avec une face inférieure qui est pourvue d'une configuration de façonnage selon au moins des parties du profil de surface dentaire d'une mâchoire inférieure d'un patient, et une face supérieure qui est pourvue d'une configuration de façonnage selon au moins des parties du profil de surface dentaire de la mâchoire supérieure du patient, la configuration de façonnage sur la face supérieure présentant une amplitude de déplacement latéral et/ou frontal-dorsal et/ou vertical définie par rapport à une relation de position d'occlusion optimale par rapport à la configuration de façonnage sur la face inférieure, les surfaces dentaires de la mâchoire inférieure et de la mâchoire supérieure étant scannées, dans la position d'occlusion optimale, une relation de position d'occlusion entre la mâchoire inférieure et la mâchoire supérieure et donc une relation d'occlusion entre les jeux de données des scans correspondants étant déterminée au moyen d'un système de détermination de position, dans une position différente de l'occlusion, une relation de position de non-occlusion entre la mâchoire inférieure et la mâchoire supérieure et donc une relation de non-occlusion entre les jeux de données des scans correspondants étant déterminée au moyen du système de détermination de position,
la latéral et/ou dorsal et/ou vertical prédéterminée étant déterminée à partir des jeux de données de la relation d'occlusion et de la relation de non-occlusion, et au moins des sections des scans enregistrés étant imprimées, en tenant compte de l'amplitude de déplacement latéral et/ou dorsal et/ou vertical prédéterminée, au moyen d'un processus de moulage par pression/chaleur d'une feuille thermoplastique sur la face inférieure ou la face supérieure en tant que configurations de façonnage.

6. Procédé selon l'une quelconque des revendications précédentes, dans lequel, pour déterminer l'amplitude de déplacement latéral et/ou frontal-dorsal et/ou vertical, une série de mouvements prédéterminés de la mâchoire, en particulier de mouvements d'ouverture et d'avancement de la mâchoire, est effectuée, et respectivement la position correspondante des condyles et/ou un feedback du patient sont enregistrés, et les positions relatives des condyles et/ou les feedbacks du patient, en particulier combinés entre eux, sont soumis à une évaluation conformément à un algorithme d'évaluation prédéterminé.

7. Procédé selon la revendication 6, dans lequel des mouvements d'ouverture et d'avancement de la mâchoire sont notamment effectués et les positions relatives correspondantes des condyles sont enregistrées, la détermination de l'amplitude de déplacement latéral et/ou frontal-dorsal et/ou vertical s'effectuant lorsque les positions des condyles ou des centres des condyles par rapport à la position relative de départ ont été modifiées d'une amplitude de translation définie.

8. Procédé selon l'une quelconque des revendications précédentes, dans lequel un signal acoustique, optique ou haptique est émis par le système de détermination de position lorsque, pendant le mouvement de la mâchoire inférieure, la position des condyles et/ou l'épaisseur de paroi de la gouttière se trouve dans ou en dehors d'une zone définie ou s'en rapproche ou s'en éloigne et/ou a atteint une amplitude prédéfinie.

9. Procédé selon l'une quelconque des revendications précédentes, dans lequel, pour déterminer la relation d'occlusion d'une occlusion optimale et/ou la relation de non-occlusion, un déroulement de mouvements de mâchoire prédéterminés, en particulier des mouvements d'ouverture de la mâchoire, est enregistré, et les scans enregistrés des surfaces dentaires avec les données de position saisies sont combinés pour en déduire des courbes enveloppantes respectives des positions des surfaces dentaires de la mâchoire inférieure et de la mâchoire supérieure.

10. Procédé selon l'une quelconque des revendications précédentes, dans lequel les surfaces dentaires de la mâchoire inférieure et de la mâchoire supérieure sont scannées intra-oralement et une relation d'occlusion entre les jeux de données des scans intra-oraux de la mâchoire supérieure et de la mâchoire inférieure est déterminée.

11. Gouttière dentaire fabriquée par un procédé selon l'une quelconque des revendications précédentes, en tenant compte de l'amplitude de déplacement latéral et dorsal et vertical prédéterminée.

12. Gouttière dentaire selon la revendication 11, formée comme une gouttière de mâchoire inférieure destinée à être fixée sur la mâchoire inférieure du patient, dans laquelle la configuration de façonnage sur la face inférieure est profilée essentiellement selon le profil de surface dentaire totale de la mâchoire inférieure du patient.

13. Gouttière dentaire selon la revendication 11, formée comme une gouttière de mâchoire supérieure destinée à être fixée sur la mâchoire supérieure du patient, dans laquelle la configuration de façonnage sur la face inférieure est profilée essentiellement selon le profil de surface dentaire totale de la mâchoire supérieure du patient.

14. Gouttière dentaire selon l'une quelconque des revendications 11 à 13, essentiellement formée d'une matière plastique dure avec des configurations de façonnage fraisées sur la face inférieure et la face supérieure.

15. Gouttière dentaire selon l'une quelconque des revendications 11 à 13, fabriquée à partir d'une poudre ou de granulés thermoplastiques fusionnés ou de polymères liquides photopolymérisables, dans laquelle les configurations de façonnage sur la face inférieure et la face supérieure sont formées par façonnage additif.

16. Gouttière dentaire selon l'une quelconque des revendications 11 à 13, fabriquée à partir d'un film thermoplastique, dans laquelle les configurations de façonnage sur la face inférieure et la face supérieure sont formées par une opération de moulage par pression/chaleur et/ou au moyen d'un élément d'adaptation rapporté, fabriqué par un procédé de fraisage ou de façonnage additif, sur au moins une de la face inférieure et la face supérieure.

17. Ensemble de gouttières dentaires selon l'une quelconque des revendications 11 à 16, dans lequel les gouttières occlusales de l'ensemble ont des amplitudes de déplacement latéral et/ou frontal-dorsal et/ou vertical différentes par rapport à la relation de position d'occlusion optimale et/ou des épaisseurs différentes au moins par parties.
